# EUROPÄISCHE PATENTSCHRIFT

(11) **EP 0 734 809 B1**
(45) Veröffentlichungstag und Bekanntmachung des Hinweises auf die Patenterteilung: **16.06.1999**
(21) Anmeldenummer: 96103798.3
(22) Anmeldetag: 11.03.1996
(51) Int. Cl.: B23K 26/06, B23K 26/08

(54) **Gerät zur Substratbehandlung, insbesondere zum Perforieren von Papier**
Apparatus for treating a substrate, particularly for perforating paper
Appareil pour le traitement d'un support, en particulier pour la perforation de papier

(30) Priorität: 28.03.1995 DE 19511393
(43) Veröffentlichungstag der Anmeldung: 02.10.1996
(73) Patentinhaber: Carl Baasel Lasertechnik GmbH, D-82319 Starnberg (DE)
(72) Erfinder: Langhans, Lutz, Dr., 82319 Starnberg (DE)
(74) Vertreter: Klunker . Schmitt-Nilson . Hirsch

(56) Entgegenhaltungen:
- EP-A- 0 624 424
- WO-A-94/29069
- DE-A- 2 918 283
- DE-A- 4 328 894
- FR-A- 2 410 446

## Beschreibung

Die Erfindung betrifft ein Gerät zur Substratbehandlung, insbesondere zum Perforieren von Papier, mit einem Laser, einer Ablenkeinheit, die den Laserstrahl über eine im Strahlenschwenkweg liegende Reihe optischer Elemente hinwegführt, die den auf sie auftreffenden Laserstrahl jeweils auf einen oder mehrere Brennflecken in der Substratoberfläche fokussieren, und jeweils ein diffraktives optisches Element aufweisen.

Ein solches Gerät ist aus der FR-A-2410440 bekannt. Speziell geht es bei dem bekannten Gerät um das Perforieren von Zigaretten. Durch die Perforierung oder Lochung des Zigarettenpapiers lassen sich unter anderem die Nikotin- und Kondensat-Werte der Zigaretten beeinflussen. Die DE-A-29 18 283 offenbart eine Vorrichtung zum Perforieren von Zigarettenpapier. Bei dieser Vorrichtung wird vor der Weiterbearbeitung das auf Spulen aufgewickelte Papier fortlaufend von einem Lasergerät perforiert. Durch geeignete Ausgestaltung der Vorrichtung lassen sich in einer Papierbahn gleichzeitig vier, acht und mehr Lochbahnen herstellen.
Speziell zum gleichzeitigen oder quasi-gleichzeitigen Herstellen mehrerer Lochbahnen in dem Papier sind in dem Strahlenschwenkweg der als Drehspiegel ausgebildeten Ablenkeinheit mehrere Sammellinsen nebeneinander angeordnet. Das Laserlicht wird über eine erste Linse auf dem Drehspiegel fokussiert, und das reflektierte Licht gelangt über eine weitere Reine von Sammellinsen und die bereits erwähnten Sammellinsen auf die Papierbahn. Jede der in einer Reine angeordnete Sammellinse vor der Papierbahn erzeugt bei einem vollen Laserstrahl-Winkelhub ein Loch.

Je nach auf einen Fleck auftreffender Energiemenge und Einstellung des Brennpunkts wird an einem Auftreffpunkt des Laserstrahl eine Mikroperforierung, das ist eine Perforierung mit einem Durchmesser von unterhalb etwa 100 µm, oder eine Makroperforierung, das ist eine Perforierung mit einem Durchmesser von mehr als etwa 100 µm, gebildet.

Bei dem aus DE-A-2918283 bekannten Gerät wird von den beiden jeweils einander zugeordneten Sammellinsen ein paralleles Lichtstrahlenbündel erzeugt. Man kann nun in diesem Strahlenweg ein Prisma anordnen, so daß aus dem Prisma zwei Strahlenbündel austreten und von der nachgeordneten Sammellinse auf der Papierbahn zwei Brennflecken erzeugt werden. Für jeden Brennflecken kann dann nur die Hälfte des ohne das Prisma verfügbaren Lichts genutzt werden. Zur gleichmässigen Strahlaufteilung muß das Prisma sehr genau zentriert werden.

Ein spezielles Problem bei den hier in Rede stehenden Geräten ist das Herstellen von Makroperforationen, die, wie oben erwähnt, einen Durchmesser von mehr als 100 µm besitzen. Die bei einer Perforierung aus einer Papierbahn zu entfernende Papiermenge steht mit der Energie im Brennpunkt des Strahls ungefähr in proportionaler Beziehung. Das heißt, bei einer Verdoppelung des Lochdurchmessers der Perforation muß in der Brennebene ungefähr die vierfache Strahlenergie bereit gestellt werden.

Schwierig, wenn nicht unmöglich, ist bei dem bekannten Gerät die Perforierung mehrerer Lochreihen scheinbar ungeordneter Lochungen und größerer Löcher. Ausgeschlossen sind spezielle Lochformen wie z.B. quadratische oder rechteckige.

Der Erfindung liegt die Aufgabe zugrunde, ein Gerät der eingangs genannten Art anzugeben, bei dem die Form und die Größe der Perforation in der Substratoberfläche ohne großen Aufwand wunschgemäß einstellbar ist.

Gelöst wird diese Aufgabe erfindungsgemäß durch die Merkmale des Anspruchs 1. Das diffraktive Element (abgekürzt: DOE) nutzt die Beugungserscheinungen an feinen Strukturen eines Gitters gezielt aus, um in der Bildebene eine gewünschte Intensitätsverteilung zu ereichen. Die diffraktiven optischen Elemente werden häufig auch abgekürzt mit HOE oder BOE bezeichnet.

Wie oben gesagt, werden häufig auch sogenannte Makroperforationen gefordert, das sind Perforationen mit einem Durchmesser von mehr als etwa 100 µm. Wenn derartige Makroperforationen in der üblichen Weise hergestellt werden, wird der Brennfleck so eingestellt, daß sein Durchmesser in der Oberfläche des Substrats, d.h. in der Papierebene, dem gewünschten Lochdurchmesser entspricht. Um das Papier im Lochbereich vollständig ausbrennen zu können, muß eine relativ hohe Energiemenge bereitgestellt werden.

Durch den erfindungsgemäßen Einsatz eines diffraktiven optischen Elements besteht nun die Möglichkeit, auf oder in der Substratoberfläche einen Ringfokus zu erzeugen. Dieser Ringfokus bewirkt also, daß nur der Umfangsbereich der gewünschten Makroperforation weggebrannt wird, der Mittelbereich der Perforation also aus der Papierbahn herausfällt, weil er keine Verbindung mit dem übrigen Papier mehr hat. Alternativ zu dem Ringfokus kann auch ein anderer, eine geschlossene Kurve definierender Fokus mit Hilfe des diffraktiven optischen Elements gebildet werden. In jedem Fall läßt sich dadurch mit relativ wenig Energieaufwand eine Papierbahn perforieren, da nicht die gesamte Fläche der Perforation weggebrannt werden muß, sondern lediglich der Umfangsbereich.

In einer speziellen Ausgestaltung der Erfindung, die die Vorteile des bereits aus der DE-A-29 18 283 bekannten Geräts besonders gut nutzt, sieht die Erfindung vor, daß sich im Strahlenschwenkweg eine Reihe von nebeneinander liegenden Sammellinsen befindet, deren Abstand vom Substrat der Linsenbrennweite entspricht, daß der Laserstrahl durch eine erste Linse auf die Reflexionsfläche eines Drehspiegels fokussiert wird, daß zwischen Drehspiegel und der Reihe nebeneinanderliegender Sammellinsen eine weitere Reihe jeweils zugeordneter Sammellinsen liegt, deren Abstand von der Reflexionsfläche des Drehspiegels ihrer Brennweite entspricht, so daß sie parallele Strahlenbündel abgeben, und daß jeder dieser Linsen ein diffraktives optisches Element vorgeschaltete ist. Vorzugsweise ist das diffraktive optische Element (DOE) mit einem solchen Gitter ausgestattet, daß es mindestens zwei Strahlenbündel abgibt, so daß zwei Brennpunkte auf der Substratoberfläche gebildet werden. Möglich sind auch noch mehr Brennpunkte, beispielsweise vier Brennpunkte, die durch jeweils ein DOE (in Verbindung mit einer nachgeordneten Sammellinse) erzeugt werden.

Durch die Verwendung eines DOE bzw. durch die Verwendung einer Reihe von nebeneinanderliegenden diffraktiven optischen Elementen in paarweiser Zuordnung zu jeder der nebeneinanderliegenden Sammellinsen läßt sich gleichzeitig mit jedem Schwenk-Winkelhub des Laserstrahls eine relativ große Anzahl von Lochungen in einzelnen Lochreihen der bewegten Papierbahn erzeugen, wenn das Gerät zum Perforieren von Zigarettenpapier eingesetzt wird.

Man kann das jeweilige diffraktive optische Element, welches zwei oder vier oder eine andere Zahl von Brennpuhkten in der Papierebene erzeugt, in der gewünschten Weise so drehen, daß in der Papierbahn eine Anzahl mehrerer paralleler Lochreihen gebildet wird, wobei die Löcher in den einzelnen Reihen derart gegeneinander in Längsrichtung der Reihen versetzt sind, daß ein quasi-unregelmäßiges Lochmuster entsteht.

Im folgenden werden Ausführungsbeispiele der Erfindung anhand der Beispiele näher erläutert. Es zeigen:
- **Fig. 1**: eine perspektivische Ansicht der wesentlichen Funktionselemente eines Geräts zum Perforieren von Papier;
- **Fig. 2**: eine schematische Ansicht des Strahlengangs in einem Teil der in Fig. 2 dargestellten Anordnung;
- **Fig. 3**: eine schematische Darstellung eines Rechteckfokus in der Papierebene;
- **Fig. 4a und 4b**: eine schematische Darstellung der Perforationen in einer Zigarettenpapierbahn bzw. einen Grundriß von vier Brennpunkten, die von einem DOE in Verbindung mit einer Sammellinse definiert werden; und
- **Fig. 5**: eine schematische Darstellung eines Ringfokus in der Ebene einer Zigarettenpapierbahn.

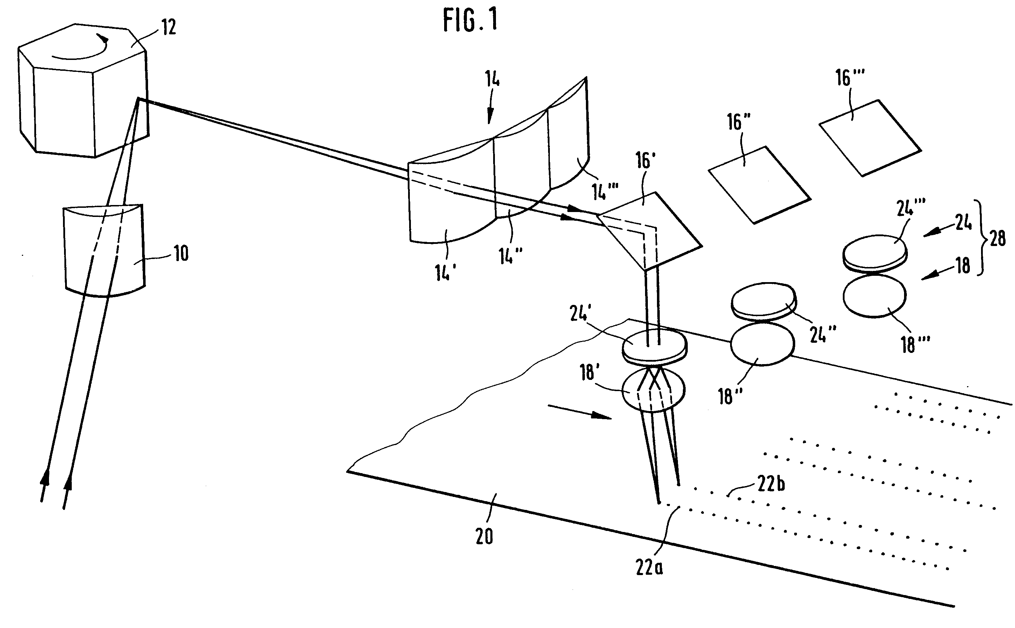

Gemäß Fig. 1 durchläuft der von einem (nicht dargestellten) Laser kommende Lichtstrahl eine erste Sammellinse 10, deren Brennpunkt auf der Fläche des im Strahlengang hinter der Sammellinse 10 angeordneten Polygon-Drehspiegels 12 liegt. Der Polygon-Drehspiegel weist sechs Facetten auf.

Der von dem Polygon-Drehspiegel 12 reflektierte Laserstrahl überstreicht einen bestimmten Winkelbereich bei jeder Facette. Der reflektierte Strahl gelangt auf ein erstes Linsensystem 14, bestehend aus drei einzelnen Sammellinsen 14', 14'', 14'''. Die Sammellinsen haben alle die gleiche Brennweite und eine solche Lage, daß ihr Brennpunkt bzw. ihre Brennebene mit dem Brennpunkt bzw. der Brennebene der Sammellinse 10 auf dem Polygon-Drehspiegel 12 zusammenfällt. Das die Linsen 14' bis 14''' verlassende Licht ist daher wieder parallel orientiert.

Bei dem dargestellten Ausführungsbeispiel sind die Sammellinsen 10 und 14 als zylindrische Linsen ausgebildet. Dies hat den Vorteil, daß der Drehspiegel 12 durch die hohe Energiedichte des Laserstrahls nicht so stark belastet wird, da bekanntlich zylindrische Linsen in der Brennebene keinen Punkt, sondern eine Linie abbilden.

Die das erste Linsensystem 14 verlassenden Lichtstrahlen werden bei dem in Fig. 1 gezeigten Ausführungsbeispiel durch Umlenkspiegel 16 um 90° abgelenkt. Die Umlenkspiegel sind bei dem in Fig. 1 dargestellten System deshalb erforderlich, weil - konstruktionsbedingt - die Papierbahn parallel zu dem den Polygon-Drehspiegel 12 verlassenden Laserstrahl verläuft.

Nach den Umlenkspiegeln 16 ist eine optische Anordnung 28 vorgesehen, die ein Linsensystem 18 und ein System aus diffraktiven optischen Elementen (DOE) 24 umfaßt. Das Linsensystem 18 enthält einzelne sphärische Sammellinsen 18', 18'' und 18'''. Der Abstand des Linsensystems 18 von der Papierbahn 20 entspricht der Brennweite der einzelnen Sammellinsen 18', 18'' und 18'''. Die Größe der Sammellinsen des Linsensystems 18 entspricht etwa der Größe der Linsen des Linsensystems 14.

Den Sammellinsen 18', 18'' und 18''' vorgeschaltet ist jeweils ein diffraktives optisches Element 24', 24'' bzw. 24'''.

Wie in Fig. 1 angedeutet ist, geht von dem diffraktiven optischen Element (DOE) 24' ein Paar von Strahlenbündeln aus, und jedes Strahlenbündel trifft auf die Sammellinse 18'. Diese erzeugt in der Ebene der Papierbahn 20 zwei von Perforationen 22a, 22b in zueinander parallelen Reihen.

In Fig. 1 sind auf der Papierbahn 20 insgesamt drei Reihen-Paare von Perforationen vorgesehen, wobei die einzelnen Reihen-Paare jeweils von einem Paar aus einem diffraktiven optischen Element und einer Sammellinse gebildet werden. Die beiden Paare aus den Elementen 24'' und 18'' sowie 24''' und 18''' arbeiten in der gleichen Weise, wie es oben für das Paar 24' und 18' beschrieben wurde.

Bei einem Überstreichen eines Winkelbereichs wird das z.B. die Linse 14' verlassende Strahlenbündel um einen entsprechenden Betrag X parallel verschoben. Die Sammellinse 18' muß eine solche Größe aufweisen, daß sie das Lichtbündel über den gesamten Bereich seiner Parallelverschiebung immer im Brennpunkt 22 fokussiert, wobei der Strahlengang des diffraktiven optischen Elements 24' berücksichtigt ist.

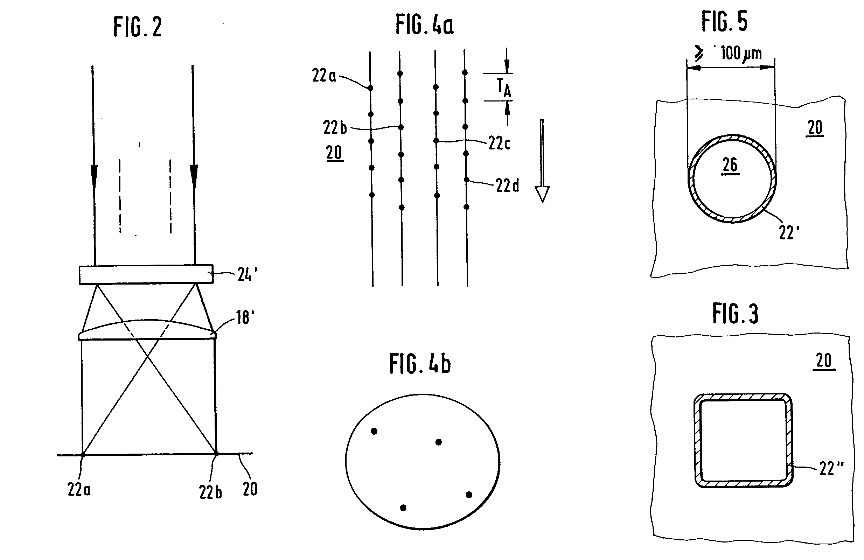

Fig. 2 zeigt das beispielsweise von der Linse 14' kommende Strahlenbündel, welches auf das diffraktive optische Element 24' auftrifft. Das Element 24' gibt zwei Strahlenbündel auf die Sammellinse 18', die die beiden Strahlenbündel ihrerseits auf zwei Brennflecken 22a und 22b in der Papierbahn 20 fokussiert.

Fig. 4a und 4b veranschaulichen den Fall der Verwendung eines diffraktiven optischen Elements, welches aus einem einfallenden Bündel paralleler Lichtstrahlen vier Teil-Strahlenbündel erzeugt, die durch die nachgeordnete Sammellinse auf vier Brennflecken der Papierbahn fokussiert werden. Fig. 4b zeigt die Verteilung der Brennflecken, Fig. 4a zeigt einen Ausschnitt einer in Pfeilrichtung bewegten Papierbahn 20. Die Winkellage des DOE ist in Bezug auf die Papierbahn 20 so gewählt, daß vier äquidistante Reihen von Perforationen gebildet werden. Die Vorschubgeschwindigkeit der Papierbahn 20 ist so gewählt, daß zwischen zwei in einer Reihe benachbarten Perforationen ein Abstand T_{A} besteht. In Fig. 4a sind die vier Brennpunkte 22a, 22b, 22c und 22d angegeben, die erzeugt werden, wenn der Laserstrahl einmal über einen Satz bestehend aus einer Sammellinse 14', einem Ablenkspiegel 16', einem diffraktiven optischen Element 24' und einer Sammellinse 18' läuft.

Fig. 5 zeigt den Fall, daß das Gitter des diffraktiven optischen Elements 24 derart strukturiert ist, daß in der Ebene der Papierbahn 20 ein Ringfokus 22' gebildet wird. Durch den Ringfokus 22' wird erreicht, daß der Umfangsbereich einer Makroperforation 26 weggebrannt wird. Der hierzu erforderliche Energieaufwand ist relativ gering, da nur der Umfangsbereich weggebrannt wird, während das in der Mitte befindliche Papier aus der Papierbahn 20 herausfällt, weil es keine Verbindung mehr mit der übrigen Papierbahn hat. Der Durchmesser der Makroperforierung 26 beträgt mehr als 100 µm.

Abwandlungen der beschriebenen Ausführungsformen sind möglich. Anstelle des in Fig. 5 dargestellten Ringfokus kann auch durch geeignete Ausbildung des Gitters des DOE 24 ein solcher Fokus gebildet werden, daß eine quadratische Perforation oder irgendeine andere Perforation entsteht, bei der lediglich der Umfangsbereich durch den Laserstrahl weggebrannt wird. Ein derartiger Rechteckfokus 22'' ist in Fig. 3 dargestellt.

## Patentansprüche

1. Gerät zur Substratbehandlung, mit einem Laser, mit einer Ablenkeinheit (12), die den Laserstrahl über eine im Strahlenschwenkweg liegende Reihe optischer Elemente (28) hinwegführt, die den auf sie auftreffenden Laserstrahl jeweils auf einen oder mehrere Brennflecken in der Substratoberfläche fokussieren, und jeweils ein diffraktives optisches Element (24', 24'', 24'''), aufweisen, **dadurch gekennzeichnet**, daß das Gitter des diffraktiven optischen Elements (24) derart ausgebildet ist, daß auf der Substratoberfläche ein eine geschlossene Kurve definierender Fokus, wie ein Ringfokus (22'), oder ein Rechteckfokus (22'') gebildet wird.

2. Gerät nach Anspruch 1, **dadurch gekennzeichnet**, daß sich im Strahlenschwenkweg eine Reihe von nebeneinander liegenden Sammellinsen (18', 18'', 18''') befindet, deren Abstand vom Substrat (20) der Linsenbrennweite entspricht, daß der Laserstrahl durch eine erste Linse (10) auf die Reflexionsfläche eines als Ablenkeinheit dienenden Drehspiegels (12) fokussiert wird, daß zwischen Drehspiegel und der Reihe nebeneinanderliegender Sammellinsen (18) eine weitere Reihe nebeneinanderliegender jeweils zugeordneter Sammellinsen (14) liegt, deren Abstand von der Reflexionsfläche des Drehspiegels (12) ihrer Brennweite entspricht, so daß diese Linsen parallele Lichtstrahlenbündel abgeben, und daß jeder dieser Linsen ein diffraktives optisches Element (24', 24'', 24''') nachgeschaltet ist.

3. Gerät nach Anspruch 1 oder 2, **dadurch gekennzeichnet**, daß das Gitter des diffraktiven optischen Elements (24', 24'', 24''') derart gebildet ist, daß es mindestens zwei Strahlenbündel abgibt, so daß mindestens zwei Brennpunkte auf der Substratoberfläche gebildet werden.

## Claims

1. A device for treating substrates, having a laser and a deviating unit (12) for guiding the laser beam over a row of optical elements (28) located in the beam sweep path, each focusing the impinging laser beam on one or more focal spots in the substrate surface, and each having a diffractive optical element (24', 24'', 24'''), characterized in that the grid of the diffractive optical element (24) is designed in such a way that a focus defining a closed curve such as a ring focus (22') or a rectangular focus (22'') is formed on the substrate surface.

2. The device of claim 1, characterized in that a row of adjacent convergent lenses (18', 18'', 18''') is located in the beam sweep path, their distance from the substrate (20) corresponding to the lens focal length, the laser beam is focused by a first lens (10) on the reflecting surface of a rotating mirror (12) serving as a deviating unit, there is located between the rotating mirror and the row of adjacent convergent lenses (18) a further row of associated convergent lenses (14), their distance from the reflecting surface of the rotating mirror (12) corresponding to their focal length so that these lenses emit parallel bundles of rays, and each of these lenses is followed by a diffractive optical element (24', 24'', 24''').

3. The device of claim 1 or 2, characterized in that the grid of the diffractive optical element (24', 24'', 24''') is formed in such a way that it emits at least two bundles of rays so as to form at least two focal spots on the substrate surface.

## Revendications

1. Appareil destiné à traiter des substrats, avec un laser, avec une unité de déviation (12), qui fait passer le rayon laser par une série d'éléments optiques (28) se trouvant sur la trajectoire de déviation, qui focalisent le rayon laser incident respectivement sur un ou plusieurs foyers situés sur la surface du substrat, et présentent respectivement un élément optique de diffraction (24', 24'', 24'''), caractérisé en ce que le réseau de l'élément optique de diffraction (24) est conçu de manière à former un foyer définissant une figure fermée, tel qu'un foyer circulaire (22') ou un foyer rectangulaire (22'').

2. Appareil selon la revendication 1, caractérisé en ce que sur la trajectoire de déviation se trouvent une série de lentilles convergentes (18', 18'', 18''') juxtaposées, dont la distance par rapport au substrat (20) correspond à la distance focale des lentilles, en ce que le rayon laser est focalisé à l'aide d'une première lentille (10) sur la surface réfléchissante d'un miroir tournant (12) jouant le rôle d'unité de déviation, en ce qu'entre le miroir tournant et la série de lentilles convergentes juxtaposées (18) se trouve une autre série de lentilles convergentes (14) juxtaposées qui leur sont respectivement associées, dont la distance par rapport à la surface réfléchissante du miroir tournant (12) correspond à leur distance focale, de sorte que ces lentilles délivrent des faisceaux parallèles de rayons lumineux, et en ce qu'un élément optique de diffraction (24', 24'', 24''') est monté en aval de chacune de ces lentilles.

3. Appareil selon la revendication 1 ou 2, caractérisé en ce que le réseau de l'élément optique de diffraction (24', 24'', 24''') est réalisé de telle sorte qu'il libère au moins deux faisceaux de rayons, afin de former au moins deux foyers sur la surface du substrat.
